# EUROPEAN PATENT APPLICATION

(11) **EP 1 655 651 A2**
(43) Date of publication of application: **10.05.2006**
(21) Application number: 05109288.0
(22) Date of filing: 06.10.2005
(51) Int. Cl.: G06F 1/00

(54) **Content selecting device, content multiplexing device, content selecting method and content multiplexing method**

(30) Priority: 29.10.2004 JP 2004316239
(71) Applicant: KABUSHIKI KAISHA TOSHIBA, Tokyo 105-8001 (JP)
(72) Inventor: Mukaide, Takanobu, 105-8001, Tokyo (JP); Kawai, Noriaki, 105-8001, Tokyo (JP)
(74) Representative: Henkel, Feiler & Hänzel

(57) **Abstract**

A switching control circuit (12) monitors the results of decision by illegality decision circuit (111 to 11n) for the presence of an illegally copied content or contents. In the absence of an illegally copied content, the switching control circuit turns on switches (131 to 13n) to allow the transmission of contents on all of transmission lines (L1 to Ln) to a multiplexing circuit. When an illegally copied content is detected by at least one of the illegality decision circuits (111 to 11n), all the switches (131 to 13n) are turned off, interrupting the transmission of contents on all the lines (L1 to Ln) to the multiplexing circuit. Thus, an illegally copied content is detected and interrupted prior to multiplexing, preventing a multiplexed signal from containing any illegally copied content.

## Description

The present invention relates to a content selecting device, a content multiplexing device, a content selecting method, and a content multiplexing method which allow multiple contents to be selected at the same time for multiple reproduction and more particularly to a copyright protection technique when some content is illegally copied.

As is well known, in recent years it has become possible to record and play back contents, such as video and audio, in digital form. For example, it has become possible to readily perform editing such that an audio content reproduced from a DVD (Digital Versatile Disk) audio disk is multiplexed onto a video content captured by a video camera and then recorded.

Digital contents suffer no deterioration and can be copied in a short time. Therefore, copyright protection has been demanded strongly and consequently various standards on encryption and copy restricting features have been set up. For example, CPPM COMPLIANCE RULES FOR DVD-AUDIO has been defined as DVD content protection rules. In particular, with CPPM (Content Protection for Prerecorded Media) and CPRM (Content Protection for Recordable Media), it is obliged to detect a water mark in playing back non-encrypted audio signals. In particular, when a water mark detected indicates other than COPY FREE, prohibition of audio playback is defined as a rule. For the details, see "Protection of DVD Contents," TOSHIBA REVIEW, vol. 58, June 2003.

According to the protection rules described above, a decision is made from the result of water mark detection after decoding of a content as to whether or not it has been copied illegally. When the decision is that it has been copied illegally, outputting of it for playback is prohibited. However, when contents are multiplexed together through such digital processing as described above, the water marks of the respective contents cannot be obtained from their respective outputs, resulting in illegally copied contents being played back. Thus, with the conventional technique, if, when multiple video and audio contents are handled in editing, either of the contents has been copied illegally, playback of the illegally copied content might be overlooked.

As a technique that relates to the invention, Japanese Unexamined Patent Publication No. 2002-305715 discloses a technique which solves a problem that, when multiplexed programs contain one program which is copy inhibited, even programs other than the copy-inhibited program cannot be recorded even if a command is given to start digital recording on the basis of copy permission information. However, this technique controls copying (recording) of streams on the basis of copy permission information and hence differs from the invention which detects illegal copies to prohibit playback thereof.

The object of the present invention is to provide a content selecting device, a content multiplexing device, a content selecting method, and a content multiplexing method which, when two or more contents are handled and at least one of the contents is an illegally copied content, allow the transmission of at least the illegally copied content to be inhibited.

According to a first aspect of the present invention, there is provided a content selecting device characterized by comprising: illegality decision means (111 to 11n) for deciding whether or not contents transmitted on all or part of multiple transmission lines (L1 to Ln) have been obtained illegally; a plurality of switches (131 to 13n) which selectively deliver contents transmitted on the transmission lines (L1 to Ln); and control means (12) responsive to the results of decision by the illegality decision means (111 to 11n) for controlling the switches (131 to 13n) to interrupt the transmission of at least contents which are decided to have been obtained illegally.

According to a second aspect of the present invention, there is provided a content multiplexing device characterized by comprising: illegality decision means (111 to 11n) for deciding whether or not contents transmitted on all or part of multiple transmission lines (L1 to Ln) have been obtained illegally; a plurality of switches (131 to 13n) which selectively deliver contents transmitted on the transmission lines (L1 to Ln); multiplexing means (14) for multiplexing contents which are delivered by the switches (131 to 13n); and control means (12) responsive to the results of decision by the illegality decision means (111 to 11n) for controlling the switches (131 to 13n) to interrupt the transmission of at least contents which are decided to have been obtained illegally.

According to a third aspect of the present invention, there is provided a content selecting method characterized by comprising: the illegality decision step of deciding whether or not contents transmitted on all or part of multiple transmission lines have been obtained illegally; the content selecting step of selectively delivering contents transmitted on the transmission lines; and the control step of controlling the content selecting step to interrupt the transmission of at least contents which are decided to have been obtained illegally in response to the results of decision by the illegality decision step.

According to a fourth aspect of the present invention, there is provided a content multiplexing method characterized by comprising: the illegality decision step of deciding whether or not contents transmitted on all or part of multiple transmission lines have been obtained illegally; the content selecting step of selectively delivering contents transmitted on the transmission lines; the multiplexing step of multiplexing contents which are selectively delivered by the content selecting step; and the control step of controlling the content selecting step to interrupt the transmission of at least contents which are decided to have been obtained illegally in response to the results of decision by the illegality decision step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a content multiplexing device embodying the present invention;
FIG. 2 is a flowchart illustrating the operation of the switching control circuit shown in FIG. 1;
FIG. 3 is a flowchart illustrating the operation of the switching control circuit shown in FIG. 1 when a priority decision method is adopted;
FIG. 4 is a block diagram of a multiple-content recording and playback device to which the principles of the invention are applied; and
FIG. 5 is a flowchart illustrating the operation of the switching control unit shown in FIG. 4.

The embodiment of the present invention will be described hereinafter with reference to the accompanying drawings.

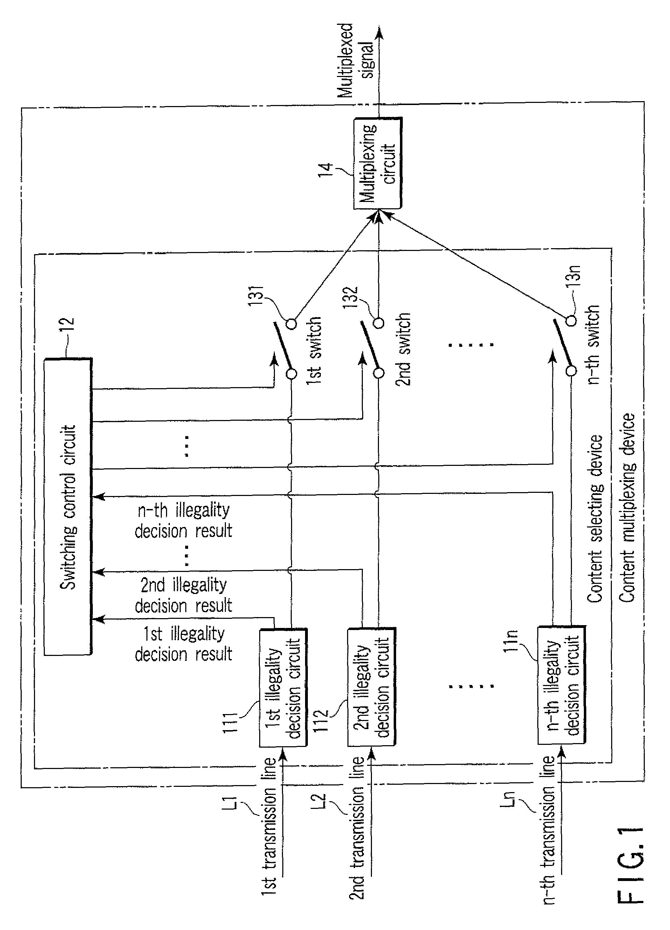

FIG. 1 is a block diagram of a content multiplexing device embodying the present invention. In this device, first through n-th illegality decision circuits 111 to 11n are placed on first through n-th content transmission lines L1 to Ln, respectively. Each of the illegality decision circuits 111 to 11n makes a decision of whether or not the corresponding input content has been copied illegally in accordance with standards and presents the result of decision to a switching control circuit 12.

On the lines L1 to Ln, the illegality decision circuits 111 to 11n are followed by first through n-th switches 131 to 13n, respectively. The switches 131 to 13n are responsive to control signals from the switching control circuit 12 to selectively interrupt the delivery of contents transmitted on the transmission lines L1 to Ln.

The contents selectively delivered by the switches 131 to 13n are sent to a multiplexing circuit 14 and multiplexed together in a predetermined format. The multiplexed contents are visually displayed on a display unit or recorded on a recording medium by a recording device.

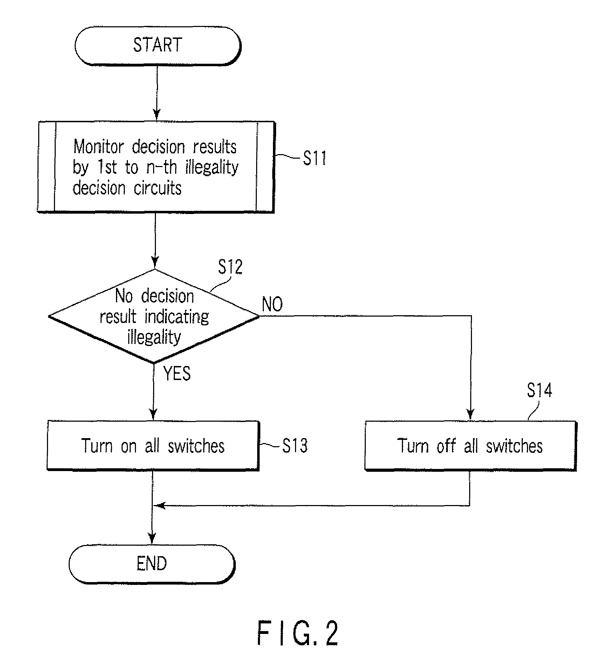

As shown in FIG. 2, the switching control circuit 12 monitors the result of decision by each of the illegality decision circuits 111 to 11n (step S11) and then decides the presence or absence of a result or results of decision indicating illegality (step S12). If there is no result of decision indicating illegality, then the switching control circuit turns on all the switches 131 to 13n (step S13) to thereby allow the transmission of contents on all the lines L1 to Ln. If, on the other hand, an illegal copy is detected in at least one of the illegality decision circuits 111 to 11n, then the switching control circuit turns off all the switches 131 to 13n (step S14) to thereby disable the transmission of contents on all the lines L1 to Ln.

Thus, any illegally copied content is detected and interrupted prior to multiplexing. A multiplexed signal will contain no illegally copied content.

In the embodiment described above, the transmission of contents on all the lines L1 to Ln is interrupted when an illegal copy is detected on at least one line; however, only lines the contents on which have been found illegal may be interrupted. In that case, contents can be multiplexed together except illegally copied contents.

In the embodiment described above, an illegality decision circuit is placed on each of the lines L1 to Ln; however, the decision circuits may be placed only on lines over which illegally copied contents may be transmitted. For example, one may suggest providing an illegality decision circuit on a line over which reproduced contents from a DVD player are transmitted but not on a line over which received contents from a digital broadcast receiver are transmitted.

In the embodiment described above, the method of selecting contents to be multiplexed when illegality is found has been described in terms of the method by which only the contents which have been found illegal are dropped from the subjects of multiplexing and the method by which all the contents are dropped from the subjects of multiplexing. In addition to the above methods, there is a priority decision method in which, when transmitted contents each have a multiplexing permission level indicating the legality of multiplexing, contents whose multiplexing permission levels are below a predetermined level are determined to be illegal and dropped from the subjects of multiplexing.

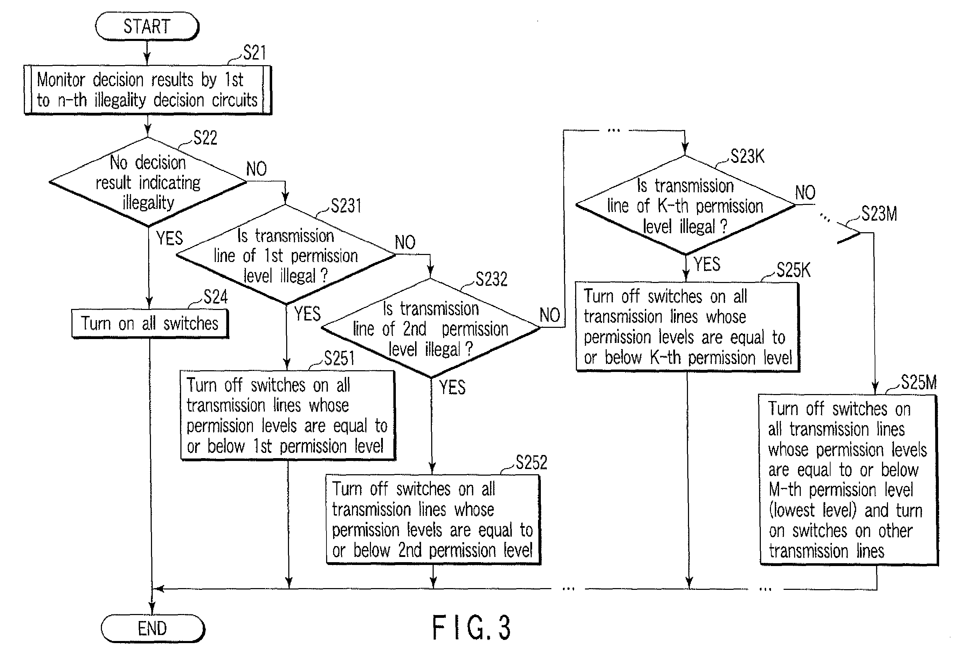

The process by the switching control circuit 12 when the priority decision method is adopted is illustrated in FIG. 3.

To simplify the description, it is assumed here that M (first to M-th) permission levels are assigned beforehand to the illegality decision circuits 111 to 11n. The priority of the permission levels is such that first permission level > ··· > K-th permission level > ··· > M-th permission level.

As shown in FIG. 3, the switching control circuit 12 monitors the result of decision by each of the illegality decision circuits 111 to 11n (step S21) and then decides the presence or absence of a result or results of decision indicating illegality (step S22). In the presence of a result or results of decision indicating illegality, the results of decision indicating illegality are examined with respect to the first to M-th permission levels (steps S231 to S23M). If there is no result of decision indicating illegality in step S22, then the switching control circuit turns on all the switches 131 to 13n (step S13) to thereby allow contents on all the lines L1 to Ln to be transmitted (step S24).

If a decision of illegality is obtained in one of the steps S231 to S23M, the switches 13 associated with all the lines whose permission levels are equal to or below the corresponding permission level are turned off and the switches associated with the other lines are turned on, thereby interrupting contents on the lines whose permission levels are equal to or below the corresponding permission level (steps S251 to S25M).

By adopting the priority decision method, all the contents whose multiplexing permission levels are below a predetermined level are determined to be illegal and dropped from the subjects of multiplexing, thus allowing control of content transmission according to the level of illegality to be implemented.

### [Embodiment]

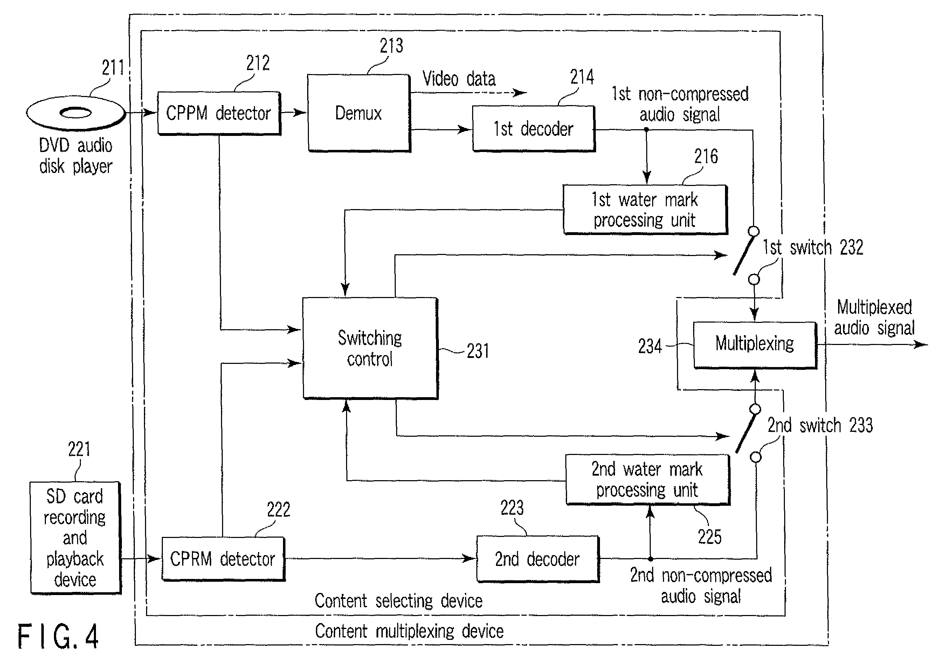

FIG. 4 is a block diagram of a multiple-content recording and playback device to which the principles of the invention are applied.

In FIG. 4, reference numeral 211 denotes a DVD audio disk player. Content data read from a DVF audio disk in the device 211 is subjected to a check for the presence of encryption conforming to the CPPM standards (hereinafter referred to as the CPPM encryption check) in a CPPM detector 212 and then separated into video data and audio data in a demux unit 213. The audio data is then decoded in a first decoding unit 214 and taken out as a first non-compressed audio signal. This first non-compressed audio signal is sent through a first switch 232 to a multiplexing unit 234 and at the same time to a first water mark processing unit 216. This first water mark processing unit 216 detects a water mark from the decoded audio signal and then makes a decision of whether or not the water mark indicates other than COPY FREE. The result of decision is sent to a switching control unit 231 together with the encryption check result from the CPPM detector 212.

Reference numeral 221 denotes an SD card recording and playback device. Content data read from an SD card in the device 221 is subjected to a check for the presence of encryption conforming to the CPRM standards (hereinafter referred to as the CPRM encryption check) in a CPRM detector 222 and then decoded in a second decoding unit 223 into a second non-compressed audio signal. This second non-compressed audio signal is sent through a second switch 233 to the multiplexing unit 234 and at the same time to a second water mark processing unit 225. Like the first water mark processing unit 216, this second water mark processing unit 225 detects a water mark from the decoded audio signal and then makes a decision of whether or not the water mark indicates other than COPY FREE. The result of decision is sent to the switching control unit 231 together with the encryption check result from the CPRM detector 222.

Based on the encryption check result from the CPPM detector 212, the COPY FREE decision result from the first water mark processing unit 216, the encryption check result from the CPRM detector 222, and the COPY FREE decision result from the second water mark processing unit 225, the switching control unit 231 provides on-off control of the first switches 232 and 233 to selectively deliver the first non-compressed audio signal, the second non-compressed audio signal, or both to the multiplexing unit 234.

The multiplexing unit 234 multiplexes (mixes) the audio signals delivered through the first and second switches 232 and 233 in a predetermined format to produce a multiplexed audio signal, which is in turn sent to a recording device not shown and recorded.

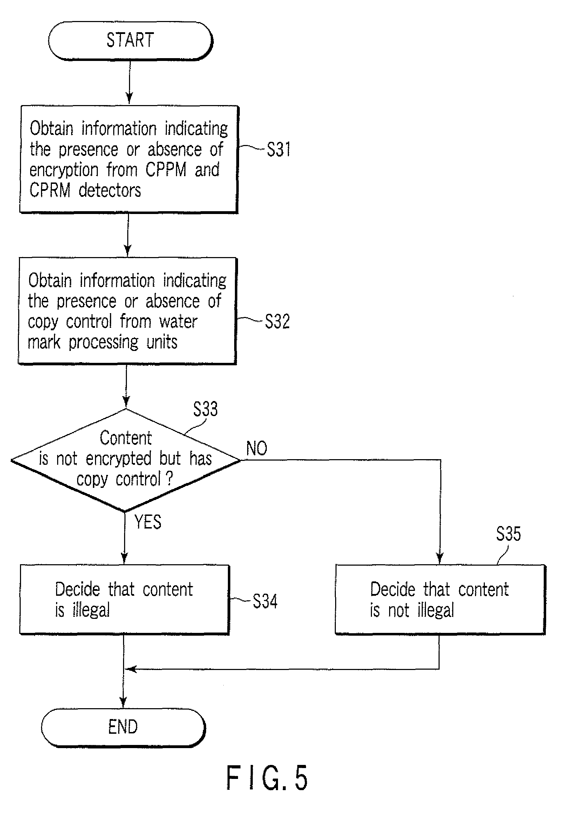

In the multiple-content recording and playback device thus arranged, the switching control unit 231 controls the first and second switches 232 and 233 in accordance with the procedure illustrated in the form of a flowchart in FIG. 5. First, the switching control unit collects the encryption check results from the CPPM and CPRM detectors 212 and 222 (step S31) and then collects the COPY FREE decision results from the first and second water mark processing units 216 and 225 (step S32). For each of the DVD content data and the SD card content data, the switching control unit decides whether it is not encrypted but has COPY CONTROL (step S33). That a content has COPY CONTROL in non-encrypted state means that it has been illegally copied. In that case, the switching control unit decides that the contents are illegally copied ones and turns the first and second switches 232 and 233 off, thereby interrupting the transmission of the content data (step S34). In other cases, that is, when a content is encrypted or when a content has no COPY CONTROL (COPY FREE), the switching control unit decides that the content is not illegally copied and then turns the first and second switches 232 and 233 on, allowing the content data to be transmitted (step S35).

Media that adopts the CPPM/CPRM standards can ensure the inability to play back illegally copied contents by utilizing water marks which are COPY CONTROL information.

Suppose, for example, that audio data is reproduced from an illegally copied DVD audio disk in the DVD audio disk player and normally created audio data is reproduced from an SD card in the SD card recording and playback device 221. In that case, in the illegally copied DVD audio disk, encryption of content data is removed but the water mark is in a state where COPY CONTROL is set. With the normally created content data recorded on the SD card, on the other hand, encryption is performed on the content data or the water mark is set COPY FREE in the non-encrypted state.

Therefore, although each of the CPPM detector 212 on the DVD side and the CPRM detector 222 on the SD card side decides that the content is not encrypted, the water mark on the DVD side indicates COPY CONTROL, resulting in a contradiction. Thus, an illegal copy is detected and the first and second switches 232 and 233 are set to the off state, thereby interrupting the transmission of either of the content data (audio data).

The embodiment is configured such that, when the DVD audio disk is detected to have been illegally copied, the content data from the SD card is also interrupted. It is also possible to interrupt only the content data from the illegally copied DVD disk and transmit the content data from the SD card.

## Claims

1. A content selecting device **characterized by** comprising:
illegality decision means (111 to 11n) for deciding whether or not contents transmitted on all or part of multiple transmission lines (L1 to Ln) have been obtained illegally;
a plurality of switches (131 to 13n) which selectively deliver contents transmitted on the transmission lines (L1 to Ln); and
control means (12) responsive to the results of decision by the illegality decision means (111 to 11n) for controlling the switches (131 to 13n) to interrupt the transmission of at least contents which are decided to have been obtained illegally.

2. The content selecting device according to claim 1, **characterized in that**, when contents transmitted on some of the transmission lines are decided to have been obtained illegally, the control means (12) controls the switches (131 to 13n) to interrupt the transmission of contents on all the transmission lines.

3. The content selecting device according to claim 1, **characterized in that**, when contents transmitted on some of the transmission lines are decided to have been obtained illegally, the control means (12) controls the switches (131 to 13n) to interrupt the transmission of only the contents which have been obtained illegally.

4. The content selecting device according to claim 1, **characterized in that** the illegality decision means (111 to 11n) detects illegality on the basis of permission levels previously determined according to degrees of illegality and outputs a corresponding permission level at detection time, and the control means (12) makes a comparison between the permission level output from the illegality decision means (111 to 11n) and a threshold and controls the switches (131 to 13n) to selectively interrupt the transmission of contents on the basis of the result of the comparison.

5. The content selecting device according to claim 1, **characterized by** further comprising copy information decision means (216, 225) for, when each of the contents contains copy information indicating whether or not it is COPY FREE, detecting the copy information from each of the contents on the transmission lines (L1 to Ln) and deciding whether or not the copy information indicates COPY FREE, and **characterized in that**, when contents are decided by the copy information decision means (216, 225) not to be COPY FREE, the control means (12) controls the switches (131 to 13n) to interrupt the transmission of at least those contents.

6. A content multiplexing device **characterized by** comprising:
illegality decision means (111 to 11n) for deciding whether or not contents transmitted on all or part of multiple transmission lines (L1 to Ln) have been obtained illegally;
a plurality of switches (131 to 13n) which selectively deliver contents transmitted on the transmission lines (L1 to Ln);
multiplexing means (14) for multiplexing contents which are delivered by the switches (131 to 13n); and
control means (12) responsive to the results of decision by the illegality decision means (111 to 11n) for controlling the switches (131 to 13n) to interrupt the transmission of at least contents which are decided to have been obtained illegally.

7. The content multiplexing device according to claim 6, **characterized in that**, when contents transmitted on some of the transmission lines are decided to have been obtained illegally, the control means (12) controls the switches (131 to 13n) to interrupt the transmission of contents on all the transmission lines.

8. The content multiplexing device according to claim 6, **characterized in that**, when contents transmitted on some of the transmission lines are decided to have been obtained illegally, the control means (12) controls the switches (131 to 13n) to interrupt the transmission of only the contents which have been obtained illegally.

9. The content multiplexing device according to claim 6, **characterized in that** the illegality decision means (111 to 11n) detects illegality on the basis of permission levels previously determined according to degrees of illegality and outputs a corresponding permission level at detection time, and the control means (12) makes a comparison between the permission level output from the illegality decision means (111 to 11n) and a threshold and controls the switches (131 to 13n) to selectively interrupt the transmission of contents on the basis of the result of the comparison.

10. The content multiplexing device according to claim 6, **characterized by** further comprising copy information decision means (216, 225) for, when each of the contents contains copy information indicating whether or not it is COPY FREE, detecting the copy information from each of the contents on the transmission lines (L1 to Ln) and deciding whether or not the copy information indicates COPY FREE, and wherein, when contents are decided by the copy information decision means (216, 225) not to be COPY FREE, the control means (12) controls the switches (131 to 13n) to interrupt the transmission of at least those contents.

11. A content selecting method **characterized by** comprising:
the illegality decision step of deciding whether or not contents transmitted on all or part of multiple transmission lines have been obtained illegally;
the content selecting step of selectively delivering contents transmitted on the transmission lines; and
the control step of controlling the content selecting step to interrupt the transmission of at least contents which are decided to have been obtained illegally in response to the results of decision by the illegality decision step.

12. A content multiplexing method **characterized by** comprising:
the illegality decision step of deciding whether or not contents transmitted on all or part of multiple transmission lines have been obtained illegally;
the content selecting step of selectively delivering contents transmitted on the transmission lines;
the multiplexing step of multiplexing contents which are selectively delivered by the content selecting step; and
the control step of controlling the content selecting step to interrupt the transmission of at least contents which are decided to have been obtained illegally in response to the results of decision by the illegality decision step.
